# EUROPÄISCHE PATENTANMELDUNG

(11) **EP 2 947 368 A1**
(43) Veröffentlichungstag der Anmeldung: **25.11.2015**
(21) Anmeldenummer: 15167465.2
(22) Anmeldetag: 13.05.2015
(51) Int. Cl.: F16L 59/02

(54) **Isolierelement bzw. Isoliersystem zur Ummantelung eines Körpers**

(30) Priorität: 23.05.2014 DE 102014209826
(71) Anmelder: ContiTech AG, 30165 Hannover (DE)
(72) Erfinder: Fleck, Andreas, 30827 Garbsen (DE); Meissner, Ronny, 30851 Langenhagen (DE); Storre, Jens, 37176 Nörten-Hardenberg (DE); Papadimitriou, Alexander, 37154 Northeim (DE); Paulsen, Hans-Peter, 37079 Göttingen (DE)
(74) Vertreter: Finger, Karsten

(57) **Zusammenfassung**

Die vorliegende Erfindung betrifft ein Isolierelement (1) zur Ummantelung eines Körpers (2) mit einer isolierend ausgestalteten Fläche (10) mit einer ersten Kante (11) und einer zweiten Kante (12), die sich jeweils im Wesentlichen in Längsrichtung (L) des Isolierelements (1) erstrecken. Das Isolierelement (1) ist dadurch gekennzeichnet, dass die isolierend ausgestaltete Fläche (10) eine sie radial zusammenziehende Vorspannung aufweist, und dass die isolierend ausgestaltete Fläche (10) in Umfangsrichtung (U) derart dimensioniert ist, dass sich im montierten Zustand die Kanten (11, 12) überlappen.

## Beschreibung

Die Erfindung betrifft ein Isolierelement zur Ummantelung eines Körpers gemäß dem Oberbegriff des Anspruchs 1 sowie ein Isoliersystem zur Ummantelung eines Körpers gemäß dem Oberbegriff des Anspruchs 3.

Es ist seit langem bekannt, zur thermischen Isolierung von z.B. großen und langen Rohrleitungen im Temperaturbereich über 130°C lose Dämmmaterialien wie z.B. Mineralwolle zu verwenden, welche um die Rohrleitungen gelegt und dort mit Folien oder einem Blechmantel fixiert und verschlossen werden. Dies erfordert einen hohen Aufwand bei der Verlegung und Befestigung des Materials, welcher teilweise auch von mehreren Personen gleichzeitig ausgeführt werden muss, um das angeordnete Material zu halten bis die Befestigung hierfür angebracht wurde. Auch werden kurze und verwinkelte bzw. schlecht zugängliche Rohrleitungsstücke oftmals gar nicht gedämmt, da der Aufwand hierfür zu hoch ist. So entstehen Teilbereiche der Rohrleitung mit großen Wärmeverlusten.

Es sind Schlauchelemente aus Elastomermaterial bekannt, die über die zu isolierende Rohrleitung übergezogen werden können. Jedoch muss die Rohrleitung hierzu ein offenes Ende aufweisen, um das Schlauchelement aufnehmen zu können. Auch können über Verzweigungsstücke hinweg bzw. hinter diesen derartige Schlauchelemente nicht vorgesehen werden.

Ferner sind Formstücke bekannt, die z.B. halbschalenförmig um eine Rohrleitung oder auch ein Verzweigungsstück von beiden Seiten angeordnet werden können. Diese müssen dann an ihren Stoßkanten verklebt werden, um einen stabilen Sitz und eine Luftdichtigkeit zur Vermeidung von Wärmeverlusten zu erreichen. Dies führt ebenfalls zu einem hohen Montageaufwand ggfs. mit mehreren Personen. Oder diese Halbschalen werden mit separaten Verschlusselementen wie z.B. Schlauchschellen, Kabelbindern oder Federbügeln fixiert.

Nachteilig ist bei den geschlossenen Isolierelementen wie z.B. einem Schlauchelement zum Überziehen oder einem verklebten Halbschalenelement, dass sie zur Demontage und Wartung aufgeschnitten werden müssen, d.h. nicht zerstörungsfrei entfernt und nicht wiederverwendet werden können. Bei den nicht-geschlossenen Systemen wie z.B. mit Verschlusselementen gehaltenen Halbschalenelementen kann nur eine unzureichende Luftdichtigkeit erreicht werden, was zu Wärmeverlusten führt.

Die WO 2004/023027 A2 betrifft eine isolierende Rohrabdeckung zum Einwickeln eines Rohres. Die Rohrabdeckung besteht aus einem Isoliermaterial mit einem äußeren Schutz und einem Verschlussmittel, um das Isoliermaterial und den äußeren Schutz an dem Rohr zu sichern. Durch das Umwickeln des Rohres kann das Isoliermaterial für verschiedene Rohrdurchmesser verwendet werden. Als Verschlussmittel können z.B. Klettverschlüsse, Klebestreifen, Sperrhaken und Kerben oder Schnappverbindungen verwendet werden.

Die GB 955,960 betrifft ein Isolierprodukt, welches aus der Kombination eines Isoliermaterials mit einem Klebestreifen besteht. Das Isoliermaterial kann aus einem festen Schaum aus natürlichem oder künstlichem Gummi bestehen. Das Isoliermaterial ist auf dem Klebestreifen derart keilförmig ausgebracht, dass sich die beiden Keilflanken beim Umwickeln überlagern und so eine konstante Dicke des Isoliermaterials über den geschlossenen Umfang des Isolierprodukts ausgebildet wird. Dies erfordert die Anpassung der Breite des keilförmigen Isoliermaterials an den zu isolierenden Umfang des Rohres, damit sich die Keilflanken genau überdecken, d.h. ohne sich zu überlappen oder einen Spalt auszubilden. Der Klebestreifen geht in Umfangsrichtung über das Isoliermaterial hinaus, so dass er auf der Rückseite des Isolierproduktes anhaften und diesen schließen und halten kann, ohne dass weitere Schließ- und Haltemechanismen erforderlich sind.

Die US 4,218,814 betrifft eine flexible schlauchförmige Ummantelung mit einem Längsschlitz von einem Ende zum anderen. Die Ummantelung kann über ein Rohr angeordnet werden, dessen Außendurchmesser nicht größer sein darf als der Innendurchmesser der Ummantelung. Die Ummantelung ist dabei derart spiralförmig verdreht ausgeführt, dass sie sich um das Rohr herum anlegt und die Stoßkanten des Längsschlitzes hierdurch in Umfangsnchtung aneinander gedrückt werden. Zur Fixierung dieser Ummantelung werden zusätzliche Mittel benötigt. So können Schlauchschellen, Bindedrähte oder dergleichen als separate Elemente verwendet werden. Alternativ können die aufeinander treffenden Stoßkanten auch einen Schließmechanismus in Form von ineinander greifenden bzw. schnappenden Elementen aufweisen.

Mit anderen Worten betrifft die US 4,218,814 eine einlagige schlauchförmige Ummantelung, deren Innendurchmesser auf den Außendurchmesser des zu isolierenden Rohrs exakt abgestimmt sein muss und deren Stoßkanten des Längsschlitzes einander im Wesentlichen in Umfangsnchtung ohne Lücke oder Überlappung direkt gegenüberliegen müssen, um die Ummantelung schließen zu können. Nachteilig ist bei dieser Art der Ummantelung, dass sie genau für den Durchmesser des Rohres hergestellt werden muss, für den sie auch verwendet wird, weil sonst die Stoßkanten in Umfangsrichtung einen Abstand aufweisen, an dem die Isolierung unterbrochen bleibt, oder sich die Ummantelung radial von dem Rohr zumindest teilweise abhebt, was einen sicheren Sitz verhindert bzw. zumindest erschwert. Auch erfordert die Schließung und Fixierung der Ummantelung entweder die üblichen zusätzlichen Mittel wie Schlauchschellen etc. oder einen erhöhten Aufwand bei der Ausbildung der Stoßkanten mit Schließ- und Haltemechanismen.

Eine Aufgabe der vorliegenden Erfindung ist es, ein Isolierelement der eingangs beschriebenen Art bereit zu stellen, das weitestgehend luftdicht isoliert, kostengünstig hergestellt, flexible eingesetzt und einfach montiert werden kann, vorzugsweise ohne weitere Elemente, und wiederverwendbar ist.

Die Aufgabe wird erfindungsgemäß durch ein Isolierelement mit den Merkmalen gemäß Anspruch 1 sowie ein Isoliersystem mit den Merkmalen gemäß Anspruch 3 gelöst. Vorteilhafte Weiterbildungen sind in den Unteransprüchen beschrieben.

Der vorliegenden Erfindung liegt dabei allgemein der Gedanke zugrunde, eine Isolierung für z.B. Rohrleitungen zur Verfügung zu stellen, die sich aufgrund der elastischen Vorspannung bzw. Eigenspannung ihrer Elemente im montierten Zustand selbstständig hält, so dass sie einfach und schnell und ohne zusätzliche Halte- und Sicherungselement montiert und auch wieder zerstörungsfrei demontiert und wiederverwendet werden kann. Gleichzeitig wird durch die Überlappung der Elemente die Isolierung in Umfangsrichtung geschlossen, so dass die Isolationswirkung sichergestellt bzw. optimiert wird. Ferner können diese Elemente für verschiedene Größen von zu isolierenden Elementen eingesetzt werden, was die Flexibilität der Anwendung erhöht und Kosten reduziert. Diese vorteilhaften Eigenschaften werden gleichermaßen durch ein einzelnes Isolierelement gemäß Anspruch 1 sowie ein Isoliersystem mit zwei C-förmigen Isolierelementen gemäß Anspruch 3 realisiert.

Somit betrifft die vorliegende Erfindung zum einen ein Isolierelement zur Ummantelung eines Körpers mit einer isolierend ausgestalteten Fläche mit einer ersten Kante und einer zweiten Kante, die sich jeweils im Wesentlichen in Längsrichtung des Isolierelements erstrecken. Das Isolierelement ist dadurch gekennzeichnet, dass die isolierend ausgestaltete Fläche eine sie radial zusammenziehende Vorspannung aufweist, und dass die isolierend ausgestaltete Fläche in Umfangsrichtung derart dimensioniert ist, dass sich im montierten Zustand die Kanten überlappen.

Die Vorspannung kann dadurch erreicht werden, dass der Innendurchmesser der isolierend ausgestalteten Fläche geringer ist als der Außendurchmesser des zu isolierenden Körpers. Hierzu kann das Isolierelement mit einem entsprechend kleinen Innendurchmesser herstellt werden, wie z.B. durch Aufwickeln des Materials auf einen Dorn mit entsprechendem Außendurchmesser und dann Aushärten oder Vulkanisieren des Isolierelements mit diesem Innendurchmesser.

Aufgrund dieser Vorspannung im Material des Isolierelements drückt sich dieses im montierten Zustand mit seiner Innenfläche an die äußere Oberfläche des zu isolierenden Körpers an, so dass es durch die eigene Vorspannung dort sicher gehalten wird. Auf separate Verschlussmechanismen wie Klebungen oder Schlauchschellen etc. kann verzichtet werden, was den Aufwand und die Kosten sowohl der Herstellung als auch der Montage reduziert.

Die Montage erfolgt durch Aufbiegen des Isolierelements entgegen seiner Vorspannung, so dass die isolierend ausgestaltete Fläche derart weit in Umfangsrichtung geöffnet und deren Kanten zueinander beabstandet werden können, dass das Isolierelement den Körper umgreifen und dann ummanteln bzw. umschließen kann. Hierdurch wird eine weitestgehend luftdichte Isolierung gewährleistet. Die Demontage erfolgt ebenso, d.h. durch erneutes Aufbiegen des Isolierelements, so dass das Isolierelement zerstörungsfrei entfernt und wiederverwendet werden kann.

Gemäß einem weiteren Aspekt der Erfindung ist die isolierend ausgestaltete Fläche in Umfangsrichtung derart dimensioniert, dass sie im montierten Zustand den Körper mehrfach, vorzugsweise zweifach, besonders bevorzugt dreifach, ummanteln kann. Durch diese Breite des Isolierelement wird zum einen die Verwendbarkeit ein und derselben Größe von Isolierelement für verschiedene Rohrdurchmesser in einem größeren Bereich ermöglicht, d.h. können mit derselben Größe von Isolierelement verschiedene Rohrdurchmesser einfach bis mehrfach ummantelt werden. Dies reduziert die Vielfalt der Isolierelemente und damit ihre Kosten. Zum anderen kann durch die mehrfache Ummantelung die Isolationswirkung erhöht und die Luftdichtigkeit verbessert werden.

Die vorliegende Erfindung betrifft auch ein Isoliersystem zur Ummantelung eines Körpers mit einem ersten Isolierhalbelement mit einer isolierend ausgestalteten Fläche mit einer ersten Kante und einer zweiten Kante, die sich jeweils im Wesentlichen in Längsrichtung des Isolierhalbelement erstrecken, und einem zweiten Isolierhalbelement mit einer isolierend ausgestalteten Fläche mit einer ersten Kante und einer zweiten Kante, die sich jeweils im Wesentlichen in Längsrichtung des Isolierhalbelement erstrecken, wobei die beiden Isolierhalbelemente im montierten Zustand den Körper in Umfangsrichtung gemeinsam vollständig ummanteln. Das Isoliersystem ist dadurch gekennzeichnet, dass wenigstens eine isolierend ausgestaltete Fläche eine sie radial zusammenziehende Vorspannung aufweist, und dass die Kanten der vorgespannten isolierend ausgegestalteten Fläche in Umfangsrichtung die Kanten der anderen isolierend ausgestalteten Fläche überlappen.

Dieses Isoliersystem realisiert den Gedanken der Erfindung auf alternative Art und Weise, indem es ebenfalls sowohl die Befestigung der Isolierhalbelemente durch deren eigene Vorspannung nutzt als auch deren weitestgehende Luftdichtigkeit durch die Überlappung erreicht, jedoch statt eines sich selbst überlappenden Isolierelements zwei einander überlappende Isolierhalbelemente nutzt. Hierzu werden die Isolierhalbelemente C-förmig ausgebildet und so gegeneinander gerichtet auf dem Rohr bzw. aufeinander angeordnet, dass sie gemeinsam eine geschlossene Isolierung bilden. Vorzugsweise weisen beide Isolierhalbelemente die nötige Vorspannung auf, um jeweils alleinig am Rohr befestigt zu werden. Jedoch kann auch nur das obere, äußere Isolierhalbelement eine Vorspannung aufweisen und hierdurch sowohl sich selbst als auch das untere, innere Isolierelement halten.

Gemäß einem weiteren Aspekt der Erfindung ist bzw. sind die isolierend ausgestaltete(n) Fläche(n) als Spiralfeder ausgebildet. Hierdurch kann die erforderliche Vorspannung erreicht werden, damit sich die Elemente selbstständig im montierten Zustand halten können.

Gemäß einem weiteren Aspekt der Erfindung ist bzw. sind die isolierend ausgestaltete(n) Fläche(n) elastisch ausgebildet. Dies ermöglicht das Aufbiegen bzw. Aufweiten eines Isolierelementes, so dass es um z.B. ein Rohr gelegt werden kann.

Gemäß einem weiteren Aspekt der Erfindung ist bzw. sind die isolierend ausgestaltete(n) Fläche(n) aus Elastomerschaum ausgebildet. Hierdurch wird die nötige Elastizität erreicht, um ein Aufbiegen bzw. Aufweiten des Isolierelements zu ermöglichen. Ferner wird durch den Schaumcharakter des Materials ein leichtes Isolierelement erreicht.

Gemäß einem weiteren Aspekt der Erfindung ist bzw. sind die isolierend ausgestaltete(n) Fläche(n) zylindrisch ausgebildet. Dies ermöglicht die einfache, geschlossene und enganliegende Montage an zylindrischen Körpern wie z.B. Rohren.

Gemäß einem weiteren Aspekt der Erfindung ist bzw. sind die isolierend ausgestaltete(n) Fläche(n) dünnwandig, vorzugsweise mit einer Dicke von weniger als 1 cm, ausgebildet. Auf diese Weise wird ein flexibler Einsatz des Isolierelements ermöglicht, z.B. an gekrümmten Rohren oder nicht-zylindrischen, z.B. eckigen Querschnitten, oder auch T-Stücken des zu isolierenden Körpers.

Gemäß einem weiteren Aspekt der Erfindung ist bzw. sind die isolierend ausgestaltete(n) Fläche(n) thermisch und bzw. oder elektrisch und bzw. oder chemisch und bzw. oder mechanisch isolierend ausgebildet. Unter einer mechanischen Isolierung kann z.B. ein Schutz vor Witterung, Reibung, Scheuern etc. verstanden werden. Diese Eigenschaften erweitern das Einsatzspektrum des Isolierelementes bzw. Isoliersystems.

Ausführungsbeispiele und weitere Vorteile der Erfindung werden nachstehend im Zusammenhang mit den folgenden Figuren erläutert. Darin zeigt:
- Fig. 1: eine perspektivische schematische Darstellung eines Isolierelements gemäß einer ersten Ausführungsform im unmontierten Zustand;
- Fig. 2: eine perspektivische schematische Darstellung eines Isolierelements gemäß der ersten Ausführungsform im montierten Zustand;
- Fig. 3: eine schematische Schnittdarstellung eines Isolierelements gemäß einer zweiten Ausführungsform im geschlossenen Zustand; und
- Fig. 4: eine schematische Schnittdarstellung eines Isoliersystems gemäß einer dritten Ausführungsform im geschlossenen Zustand.

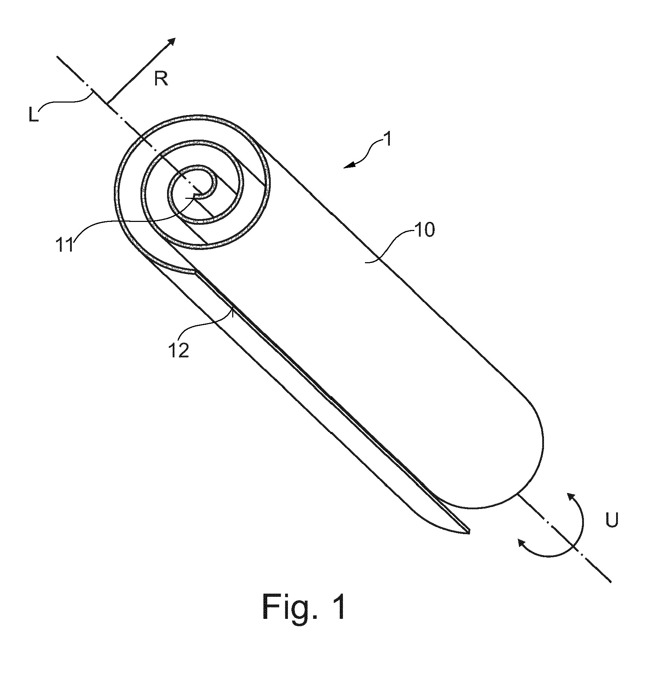

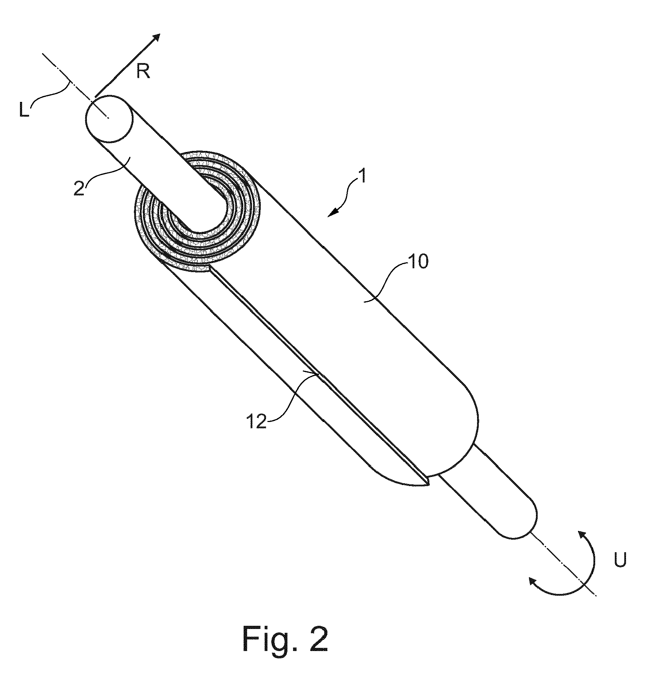

Fig. 1 zeigt eine perspektivische schematische Darstellung eines Isolierelements 1 gemäß einer ersten Ausführungsform im unmontierten Zustand. Fig. 2 zeigt eine perspektivische schematische Darstellung eines Isolierelements 1 gemäß der ersten Ausführungsform im montierten Zustand.

Das Isolierelement 1 weist eine isolierend ausgestaltete Fläche 10 auf, welche in Längsrichtung L eine erste Kante 11 und eine zweite Kante 12 aufweist. Zwischen den beiden Kanten 11, 12 ist die isolierend ausgestaltete Fläche 10 spiralförmig in Umfangsrichtung U eingerollt, so dass die erste Kante 11 radial im Inneren des Isolierelements 1 und die zweite Kante 12 radial außen am Isolierelement 1 angeordnet ist.

Durch seine spiralförmige Ausgestaltung weist das elastische Isolierelement 1 eine Vorspannung auf, so dass es entgegen dieser aufgebogen werden kann und sich danach wieder in sich selbst zusammenzieht. Auf diese Weise kann das elastische Isolierelement 1 um einen zu isolierenden Körper 2 wie einer Rohrleitung 2 angeordnet werden, indem es sich mit seinen einzelnen Lagen an die äußere Oberfläche der Rohrleitung 2 anlegt und diesen vollständig umschließt, so dass eine weitestgehend luftdichte thermisch Isolation erreicht werden kann.

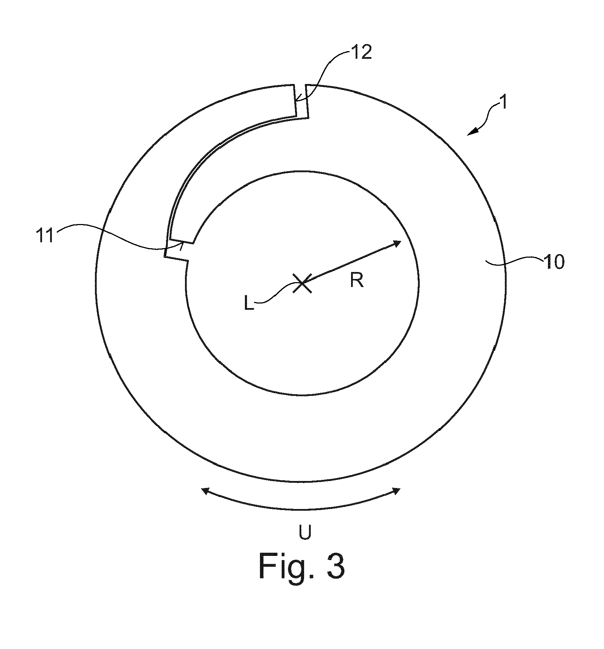

Fig. 3 zeigt eine schematische Schnittdarstellung eines Isolierelements 1 gemäß einer zweiten Ausführungsform im geschlossenen Zustand. In diesem Fall sind die Kanten 11, 12 stufenförmig bzw. keilförmig verlaufend ausgebildet, so dass sich die Bereiche der Kanten 11, 12 überlappen können und gleichzeitig nach außen hin eine weitestgehend ebene und stufenlose Oberfläche entsteht, d.h. das gesamte Isolationselement 1 einen weitestgehend konstante Dicke in radialer Richtung R aufweist.

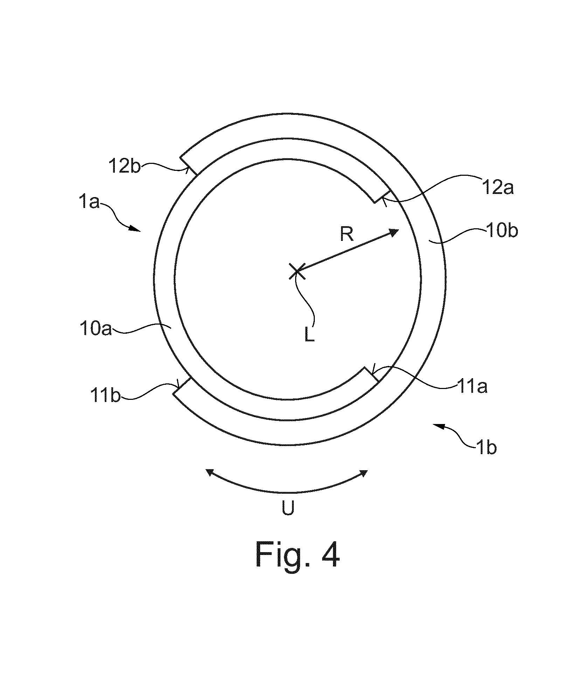

Fig. 4 zeigt eine schematische Schnittdarstellung eines Isoliersystems 1a, 1b gemäß einer dritten Ausführungsform im geschlossenen Zustand. Hier ist der Gedanke der vorliegenden Erfindung durch zwei halbschalenförmige bzw. C-förmige Isolierhalbelemente 1a, 1b verwirklicht. Diese weisen jeweils eine isolierend ausgestaltete Fläche 10a, 10b mit ersten Kanten 11a, 11b und zweiten Kanten 12a, 12b auf. Das erste, innere Isolierhalbelement 1a wird zuerst aufgebogen und um die Rohrleitung 2 geklemmt. Danach wird das zweite, äußere Isolierelement 1b so über das erste, innere Isolierelement 1a und die Rohrleitung 2 geklemmt, dass beide Isolierhalbelemente 1a, 1b zusammen eine geschlossene Isolierung um die Rohrleitung 2 bilden.

### Bezugszeichenliste

### (Teil der Beschreibung)

- L: Längsachse
- R: Radius, senkrecht zur Längsachse L
- U: Umfangsrichtung um die Längsachse L

- 1: Isolierelement
- 10: isolierend ausgestaltete Fläche des Isolierelements 1
- 11: ersten, innere Kante des Isolierelements 1
- 12: zweite, äußere Kante des Isolierelements 1

- 1a: erstes, inneres Isolierhalbelement
- 10a: isolierend ausgestaltete Fläche des ersten, inneren Isolierhalbelements 1a
- 11a: ersten Kante des ersten, inneren Isolierhalbelements 1a
- 12a: zweite Kante des ersten, inneren Isolierhalbelements 1a
- 1b: zweites, äußeres Isolierhalbelement
- 10b: isolierend ausgestaltete Fläche des zweiten, äußeren Isolierhalbelements 1b
- 11b: ersten Kante des zweiten, äußeren Isolierhalbelements 1b
- 12b: zweite Kante des zweiten, äußeren Isolierhalbelements 1b

- 2: Körper, Rohr(-leitung)

## Patentansprüche

1. Isolierelement (1) zur Ummantelung eines Körpers (2), mit einer isolierend ausgestalteten Fläche (10) mit einer ersten Kante (11) und einer zweiten Kante (12), die sich jeweils im Wesentlichen in Längsrichtung (L) des Isolierelements (1) erstrecken,
**dadurch gekennzeichnet,**
**dass** die isolierend ausgestaltete Fläche (10) eine sie radial zusammenziehende Vorspannung aufweist, und
**dass** die isolierend ausgestaltete Fläche (10) in Umfangsrichtung (U) derart dimensioniert ist, dass sich im montierten Zustand die Kanten (11, 12) überlappen.

2. Isolierelement (1) nach Anspruch 1,
wobei die isolierend ausgestaltete Fläche (10) in Umfangsrichtung (U) derart dimensioniert ist, dass sie im montierten Zustand den Körper (2) mehrfach, vorzugsweise zweifach, besonders bevorzugt dreifach, ummanteln kann.

3. Isoliersystem zur Ummantelung eines Körpers (2), mit einem ersten Isolierhalbelement (1a) mit einer isolierend ausgestalteten Fläche (10a) mit einer ersten Kante (11a) und einer zweiten Kante (12a), die sich jeweils im Wesentlichen in Längsrichtung (L) des Isolierhalbelement (1a) erstrecken, und einem zweiten Isolierhalbelement (1b) mit einer isolierend ausgestalteten Fläche (10b) mit einer ersten Kante (11b) und einer zweiten Kante (12b), die sich jeweils im Wesentlichen in Längsrichtung (L) des Isolierhalbelement (1b) erstrecken, wobei die beiden Isolierhalbelemente (1a; 1b) im montierten Zustand den Körper (2) in Umfangsrichtung (U) gemeinsam vollständig ummanteln,
**dadurch gekennzeichnet,**
**dass** wenigstens eine isolierend ausgestaltete Fläche (10a; 10b) eine sie radial zusammenziehende Vorspannung aufweist, und
**dass** die Kanten (11a, 12a; 11b, 12b) der vorgespannten isolierend ausgestalteten Fläche (10a; 10b) in Umfangsrichtung (U) die Kanten (11a, 12a; 11b, 12b) der anderen isolierend ausgestalteten Fläche (10a; 10b) überlappen.

4. Isolierelement (1) bzw. Isoliersystem nach einem der vorherigen Ansprüche, wobei die isolierend ausgestaltete Fläche(n) (10; 10a, 10b) als Spiralfeder ausgebildet ist/sind.

5. Isolierelement (1) bzw. Isoliersystem nach einem der vorherigen Ansprüche, dass die isolierend ausgestaltete Fläche(n) (10; 10a, 10b) elastisch ausgebildet ist/sind.

6. Isolierelement (1) bzw. Isoliersystem nach einem der vorherigen Ansprüche, wobei die isolierend ausgestaltete Fläche(n) (10; 10a, 10b) aus Elastomerschaum ausgebildet ist/sind.

7. Isolierelement (1) bzw. Isoliersystem nach einem der vorherigen Ansprüche, wobei die isolierend ausgestaltete Fläche(n) (10; 10a, 10b) zylindrisch ausgebildet ist/sind.

8. Isolierelement (1) bzw. Isoliersystem nach einem der vorherigen Ansprüche, wobei die isolierend ausgestaltete Fläche(n) (10; 10a, 10b) dünnwandig, vorzugsweise mit einer Dicke von weniger als 1 cm, ausgebildet ist/sind.

9. Isolierelement (1) bzw. Isoliersystem nach einem der vorherigen Ansprüche, wobei die isolierend ausgestaltete Fläche(n) (10; 10a, 10b) thermisch und/oder elektrisch und/oder chemisch und/oder mechanisch isolierend ausgebildet ist/sind.
